# EUROPÄISCHE PATENTSCHRIFT

(11) **EP 0 454 974 B1**
(45) Veröffentlichungstag und Bekanntmachung des Hinweises auf die Patenterteilung: **02.03.1994**
(21) Anmeldenummer: 91103767.9
(22) Anmeldetag: 12.03.1991
(51) Int. Cl.: A22C 11/02, B65B 9/15

(54) **Maschine zum Füllen von schlauchförmigen, flexiblen Packungshüllen**
Apparatus for filling tubular flexible packaging foils
Machine pour remplir des emballages flexibles tubulaires

(30) Priorität: 27.03.1990 DE 4009803
(43) Veröffentlichungstag der Anmeldung: 06.11.1991
(73) Patentinhaber: TECHNOPACK EWALD HAGEDORN KG (GMBH & CO), 21509 Glinde (DE)
(72) Erfinder: Heimbold, Hans-Jürgen, W-2056 Glinde (DE)
(74) Vertreter: Glawe, Delfs, Moll & Partner

(56) Entgegenhaltungen:
- EP-A- 0 105 558
- EP-A- 0 268 206
- EP-A- 0 352 825
- FR-A- 2 090 284
- GB-A- 976 987

## Beschreibung

Die Erfindung betrifft eine Maschine zum Füllen von schlauchförmigen, flexiblen Packungshüllen, insbesondere Wursthüllen.

Eine bekannte Maschine (offenkundige Vorbenutzung) umfaßt ein Füllrohr mit feststehender Längsachse, durch das die in die Hüllen einzufüllende Masse zugeführt wird. Auf das Füllrohr ist ein Hüllvorrat aufgebracht, dessen vorlaufendes Ende vor dem freien Ende des Füllrohrs verschlossen ist, so daß die abzufüllende Masse in das Ende der Hülle eintritt. An das freie Ende des Füllrohrs schließt sich eine Verschließvorrichtung an, nämlich ein Klammersetzapparat, der am Ende eines gefüllten Hüllenabschnitts die Füllmasse verdrängt und einen doppelten Verschluß setzt für das Ende des vorlaufenden Hüllenabschnitts und für den Beginn des folgenden. Um einen gewissen Fülldruck zu gewährleisten und um zu verhindern, daß die Füllmasse auf der Außenseite des Füllrohrs im Hüllvorrat zurückdringt, ist eine sogenannte Hüllbremse oder Darmbremse vorgesehen, die das freie Ende des Füllrohrs umgibt und den Hüllschlauch während des Abziehens an den Außenumfang des Füllrohrs andrückt, um eine Abziehreibung einerseits und eine Dichtung andererseits zu erzeugen. Sie kann gegen Federkraft oder unter einer geeigneten Steuerung zurückbewegbar sein, um Ausweichvolumen für die Füllmasse zur Verfügung zu stellen, während die Verschließmaschine in dem mit Verschlüssen zu versehenden Teil der Hülle die Füllmasse verdrängt.

Das Füllrohr reicht in der Betriebsstellung bis dicht an die Verschließvorrichtung heran oder sogar zwischen Teile, die zur Verschließvorrichtung gehören. Dadurch sowie durch das Vorhandensein der Hüllbremse läßt sich ein frischer Hüllvorrat nicht auf das Füllrohr aufziehen, ohne daß die Verschließvorrichtung vom freien Füllrohrende entfernt und die Hüllbremse abgenommen wird. Zu diesem Zweck ist die Verschließvorrichtung um eine vertikale, gegenüber der Füllrohrachse versetzte Achse verschwenkbar oder in Längsrichtung des Füllrohrs verschiebbar zwischen der Betriebsstellung und einer vom Füllrohrende entfernten Rüststellung. Da es sich um eine Relativbewegung zwischen Füllrohr und Verschließmaschine handelt, kann statt dessen auch bei stationär bleibender Verschließmaschine das Füllrohr verschoben werden. Es kommt darauf an, daß in der Rüststellung ein Abstand zwischen dem freien Füllrohrende und der Verschließmaschine entsteht, der zum einen die Entfernung der Hüllbremse vom Füllrohrende und zum anderen das Aufziehen eines neuen Hüllvorrats gestattet. Das Abnehmen der Hüllbremse vom Füllrohr wird von Hand durchgeführt und vollzieht sich zunächst in einer Bewegung in Füllrohrlängsrichtung und dann, nachdem die Hüllbremse von dem Füllrohr freigeworden ist, in einer Schwenkbewegung um eine parallel zum Füllrohr verlaufende Schwenkachse, und umgekehrt beim Wiederaufsetzen der Hüllbremse. Dieser Vorgang bedarf einer gewissen Sorgfalt, da die elastischen, mit der Hülle zusammenwirkenden Lippen der Hüllbremse sonst beschädigt werden können. Dies ist einerseits hinderlich und führt andererseits doch mitunter zu einer Beschädigung der an der Hüllbremse vorgesehenen Lippen. Außerdem widersetzt es sich Automatisierungsversuchen.

Ausgehend von der beschriebenen, bekannten Maschine liegt der Erfindung die Aufgabe zugrunde, die Betriebsweise zu vereinfachen.

Die erfindungsgemäße Lösung besteht darin, daß die Längs-und Schwenkbewegung der Hüllbremse zwangsläufig miteinander und mit der Relativbewegung der Verschließvorrichtung zum Füllrohr beim Übergang aus der Betriebs- in die Rüststellung und umgekehrt gekoppelt ist.

Zweckmäßigerweise geschieht die Koppelung durch mechanische Kurvensteuerung. Jedoch ist auch eine gesonderte, automatische Steuerung der Längs- und der Schwenkbewegung, beispielsweise durch gesonderte Antriebsmittel, möglich, wobei die Bewegungen steuerungstechnisch miteinander gekoppelt sind.

Insbesondere dann, wenn die Koppelung mechanisch durch Steuerkurven erfolgt, ist es zweckmäßig, wenn die Hüllbremse von einer sie zur Verschließvorrichtung hin drängenden Kraft eines Kraftspeichers (beispielsweise einer Feder) beaufschlagt ist. In diesem Zusammenhang ist zweckmäßigerweise vorgesehen, daß sie in der Betriebsstellung am Füllrohrende durch einen mit der Verschließvorrichtung zusammenwirkenden Anschlag gehalten ist. Sobald die Verschließvorrichtung sich vom Füllrohr entfernt und dadurch dieser Anschlag ebenfalls entfernt wird, verschiebt sich die Hüllbremse unter dem Einfluß der Kraft des Kraftspeichers in Längsrichtung. Sobald sie vom Füllrohrende frei ist, sorgen Steuerkurven dafür, daß ihrer fortdauernden translatorischen Bewegung in Längsrichtung eine Schwenkbewegung überlagert wird. Wenn nach dem Aufbringen eines neuen Hüllvorrats die Verschließvorrichtung wieder in die Betriebsstellung überführt wird, kommt der an der Verschließvorrichtung vorgesehene Anschlag wieder mit dem Anschlag der Hüllbremse zusammen und schiebt dadurch die Hüllbremse zum Füllrohr hin. Unter dem Einfluß der Kurvensteuerung geschieht dies zunächst mit der in umgekehrter Richtung überlagerten Schwenkbewegung, bis die Hüllbremse sich genau vor dem Füllrohrende befindet, und dann nur noch in Längsrichtung. Es versteht sich, daß der Schub, der in diesem Beispiel von der Verschließvorrichtung auf die Hüllbremse ausgeübt wird, auch durch ein separates Antriebsmittel, beispielsweise einen besonderen pneumatischen Zylinder, hervorgerufen werden könnte.

Die Erfindung wird im folgenden näher unter Bezugnahme auf die Zeichnung erläutert, die ein vorteilhaftes Ausführungsbeispiel veranschaulicht. Darin zeigen:
- Fig. 1: eine Draufsicht auf die Maschine in der Betriebsstellung und
- Fig. 2: eine entsprechende Draufsicht in Rüststellung.

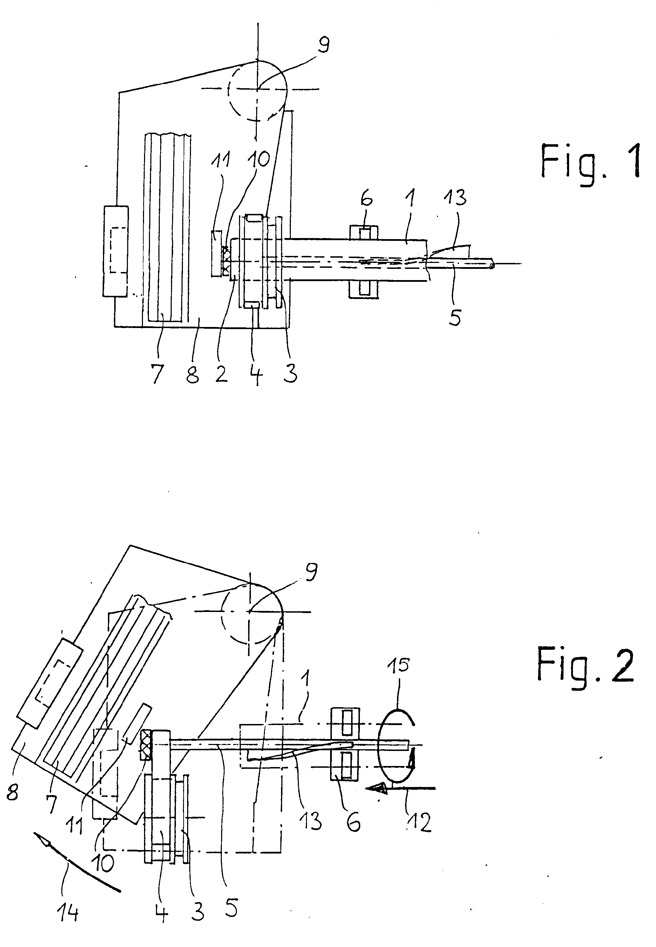

Das stationäre Füllrohr 1, das der besseren Übersicht halber in Fig. 2 lediglich strichpunktiert angedeutet ist, ist mit dem rechten, nicht gezeigten Ende an eine Massepumpe angeschlossen. Sein linkes, freies Ende 2 ist mit der Hüllbremse 3 versehen, die zwischen zwei Gabelfingern 4 gehalten ist, die an einer Haltestange 5 fest angebracht sind, die parallel zum Füllrohr 1 und etwa unter diesem verläuft. Die Haltestange 5 ist in festen Lagern gehalten, von denen eines bei 6 angedeutet ist. Sie ist in später noch zu erläuternder Weise in ihrer Längsrichtung und rotativ beweglich. Das freie Ende 2 des Füllrohrs 1 ist der Verschließvorrichtung 7 zugewandt, die auf einer Montageplatte 8 angeordnet ist, die um die vertikal und senkrecht zur Zeichenebene stehende Achse 9 schwenkbar ist. Die Betriebsstellung ist in Fig. 1 gezeigt und in Fig. 2 strichpunktiert angedeutet, während die Rüststellung in Fig. 2 mit durchgezogenen Linien gezeigt ist.

Die Haltestange 5 oder die Zange 4 ist an ihrem der Verschließvorrichtung zugewandten Ende mit einem Anschlag 10 fest verbunden, der zusammenwirkt mit einer Anschlagleiste 11, die fest an der Montageplatte 8 angebracht ist. Der Anschlag 10 wird durch eine auf die Haltestange 5 in Pfeilrichtung 12 wirkende, nicht dargestellte Feder in Anlage an der Anschlagleiste 11 gehalten. Gegen diese Feder ist die Hüllbremse 3 auch in Betriebsstellung bis zu einem gewissen Grade beweglich, um auf die Masseverdrängung der Verschließvorrichtung reagieren zu können.

An der Haltestange 5 ist eine Steuerkurve 13 fest angebracht, die in jedem Querschnitt radial von der Haltestange 5 vorsteht und schraubenförmig über etwa 90° gewunden ist. Sie ist zwischen Führungskanten in der Lagerung 6 quer fest aber längs gleitfähig eingeschlossen. Somit bestimmt sie die Drehlage der Haltestange 5, der Gabel 4 und der Hüllbremse 3. In der Betriebsstellung wirkt ihr in der Zeichnung linkes Ende mit den Führungskanten der Lagerung 6 zusammen.

Wird nun die Verschließvorrichtung aus der Betriebsstellung in die Rüststellung im Sinne des Pfeils 14 verschwenkt, so bewegt sich die Anschlagleiste 11 in der Zeichnung nach links. Infolge der auf die Haltestange 5 wirkenden Federkraft bleibt der Anschlag 10 in Anlage an der Anschlagleiste 11, so daß die Führungsstange 5 sich in Pfeilrichtung 12 nach links bewegt. Dabei ist die Form der Steuerkurve 13 so gewählt, daß die Hüllbremse sich zunächst geradlinig in Richtung des Füllrohrs 1 bewegt, bis sie vom Füllrohrende frei ist. Danach überlagert sich der Längsbewegung der Haltestange 5 eine Drehbewegung in Richtung des Pfeils 15 über etwa 90°, so daß sich die Hüllbremse 3 aus dem Bereich vor dem freien Füllrohrende 2 entfernt und diese zugänglich wird für das Aufschieben eines neuen Hüllenvorrats. Wenn die Verschließmaschine entgegen der Pfeilrichtung 14 wieder in die Betriebsstellung zurückgeschwenkt wird, schiebt die Anschlagleiste 11 über den Anschlag 10 die Haltestange 5 wieder nach rechts, wobei aufgrund der Wirkung der Führungskurve 13 die Hüllbremse 3 zunächst fluchtend vor das Hüllrohrende 2 gebracht und schließlich auf dieses augeschoben wird.

Man erkennt, daß eine gesonderte, manuelle Behandlung der Hüllbremse nicht mehr erforderlich ist. Sie gelangt vielmehr selbsttätig und zwangsläufig bei der Relativbewegung der Verschließvorrichtung 7 gegenüber dem Füllrohr 1 in die jeweils erforderliche Endstellung.

## Patentansprüche

1. Maschine zum Füllen von schlauchförmigen, flexiblen Packungshüllen, insbesondere Wursthüllen, mit einem Füllrohr (1) mit feststehender Längsachse, einer an das Füllrohrende (2) sich anschließenden Verschließvorrichtung (7), die im Verhältnis zum Füllrohr 1 verstellbar ist zwischen einer dem freien Füllrohrende (2) nahen Betriebsstellung (Fig. 1) und einer Rüststellung (Fig. 2), in der zwischen ihr und dem freien Füllrohrende ein Abstand zum Aufbringen eines Packungshüllenvorrats auf das Füllrohr besteht, und mit einer in Betriebsstellung das freie Füllrohrende (2) umgebenden Hüllbremse (3), die in der Rüststellung von dem freien Füllrohrende (2) in Längsrichtung abziehbar und um eine zur Füllrohrachse parallele Achse aus dessen Richtung herausschwenkbar ist und umgekehrt, dadurch gekennzeichnet, daß die Längs- und Schwenkbewegung der Hüllbremse (3) zwangsläufig miteinander und mit der Relativbewegung der Verschließvorrichtung (7) zum Füllrohr (1) beim Übergang von der Betriebs- in die Rüststellung und umgekehrt gekoppelt sind.

2. Maschine nach Anspruch 1, dadurch gekennzeichnet, daß die Längs- und die Schwenkbewegung der Hüllbremse (3) miteinander durch mechanische Kurvensteuerung (13) gekoppelt sind.

3. Maschine nach Anspruch 1 oder 2, dadurch gekennzeichnet, daß die Hüllbremse (3) von einer sie zur Verschließvorrichtung drängenden Kraft eines Kraftspeichers beaufschlagt ist.

4. Maschine nach Anspruch 3, dadurch gekennzeichnet, daß die Hüllbremse (3) mit einem mit einem Teil (11) der Verschließmaschine (7) zusammenwirkenden Anschlag (10) verbunden ist und durch die Schließbewegung gegen die Kraft des Kraftspeichers in die Betriebsstellung zurückbewegbar ist.

## Claims

1. A machine for filling tubular, flexible packaging casings, in particular sausage casings, having a filling tube (1) with a stationary longitudinal axis, a sealing device (7) which adjoins the filling tube end (2) and which, in relation to the filling tube (1), is adjustable between an operating position (Figure 1) near to the free end (2) of the filling tube and a preparatory position (Figure 2) in which there is a clearance between it and the free end of the filling tube for applying a supply of packaging casing to the filling tube, and a casing brake (3) which surrounds the free end (2) of the tube in the operating position, which in the preparatory position is able to be withdrawn in the longitudinal direction from the free end (2) of the tube and which can be swung about an axis parallel to the filling tube axis out of the direction thereof, and vice versa, characterised in that the longitudinal movement and pivotal movement of the casing brake (3) are constrained to be coupled with one another and with the movement of the sealing device (7) relative to the filling tube (1) when passing from the operating position to the preparatory position, and vice versa.

2. A machine according to Claim 1, characterised in that the longitudinal movement and pivotal movement of the casing brake (3) are coupled with one another by a mechanical cam control (13).

3. A machine according to Claim 1 or 2, characterised in that the casing brake (3) is urged towards the sealing device by an applied force from an energy accumulator.

4. A machine according to Claim 3, characterised in that the casing brake (3) is connected to a stop member (10) co-operating with a part (11) of the sealing device (7) and can be moved back into the operating position by the closing movement against the force of the energy accumulator.

## Revendications

1. Machine pour le remplissage de gaines flexibles de conditionnement en forme de tuyau, en particulier de boyaux de saucisson, comprenant un tube de remplissage (1) à axe longitudinal fixe, un dispositif de fermeture (7) qui est contigu à l'extrémité (2) du tube de remplissage et qui est mobile par rapport au tube de remplissage (1) entre une position de travail (fig. 1) à proximité de l'extrémité libre (2) du tube de remplissage et une position de préparation (fig. 2) dans laquelle il existe, entre lui et l'extrémité libre du tube de remplissage, une distance pour la mise en place d'une réserve de gaine de conditionnement sur le tube de remplissage, ainsi qu'un frein de gaine (3) qui, en position de travail, entoure l'extrémité libre (2) du tube de remplissage et qui, dans la position de préparation, peut être retiré de l'extrémité libre (2) du tube de remplissage en direction longitudinale et être écarté de cette direction par basculement autour d'un axe parallèle à l'axe du tube de remplissage et inversement, caractérisée en ce que le mouvement longitudinal et le mouvement de basculement du frein de gaine (3) sont couplés de force l'un à l'autre et au mouvement relatif du dispositif de fermeture (7) par rapport au tube de remplissage (1) lors du passage de la position de travail à la position de préparation et vice versa.

2. Machine selon la revendication 1, caractérisée en ce que le mouvement longitudinal et le mouvement de basculement du frein de gaine (3) sont couplés l'un à l'autre par une commande mécanique à came (13).

3. Machine selon la revendication 1 ou 2, caractérisée en ce que le frein de gaine (3) est sollicité par une force d'un accumulateur de force qui le repousse vers le dispositif de fermeture.

4. Machine selon la revendication 3, caractérisée en ce que le frein de gaine (3) est raccordé à une butée (10) qui coopère avec une partie (11) du dispositif de fermeture (7) et en ce qu'il peut être ramené dans la position de travail, contre la force antagoniste de l'accumulateur de force, par le mouvement de fermeture.
